# EUROPEAN PATENT APPLICATION

(11) **EP 4 636 012 A1**
(43) Date of publication of application: **22.10.2025**
(21) Application number: 24305614.0
(22) Date of filing: 19.04.2024
(51) Int. Cl.: C08G 77/04, B32B 7/02, B32B 25/20, C08G 77/06, C08G 77/14, C08J 7/04, C08J 7/046, C08K 3/22, C09D 183/06, G02B 1/11, G02B 1/111, G02B 1/14

(54) **OPTICAL ARTICLE COMPRISING A HIGH REFRACTIVE INDEX ABRASION- AND/OR SCRATCH-RESISTANT COATING HAVING A LOW SENSITIVITY TO ENVIRONMENTAL CONDITIONS**

(71) Applicant: Essilor International, 94220 Charenton-Le-Pont (FR)
(72) Inventor: LAVAL, Gautier, 94700 MAISONS-ALFORT (FR); CLIPET, Christèle, 77680 ROISSY EN BRIE (FR); AMESTOY, Antoine, 92160 ANTONY (FR); LECHANTRE, Stéphanie, 94210 LA VARENNE SAINT HILAIRE (FR)
(74) Representative: Jacobacci Coralis Harle

(57) **Abstract**

The invention relates to a curable composition for an abrasion-and/or scratch-resistant coating, comprising at least one epoxy compound bearing at least one silicon atom having at least one hydrolyzable group directly linked to the silicon atom and at least one group comprising an epoxy function linked to the silicon atom through a carbon atom, and/or a hydrolyzate thereof, at least one silane compound of formula Z¹Z²SiR¹R², and/or a hydrolyzate thereof, in an amount of 1 to 10 %, relative to the dry extract weight of the composition, in which Z¹ and Z² independently represent a hydrolyzable group or a hydrogen atom, R¹ and R² independently represent a monovalent organic group devoid of epoxy group and linked to the silicon atom through a carbon atom, colloidal particles of metal oxide or metalloid oxide, comprising (c1) colloidal particles of titanium oxide, and (c2) colloidal particles of tin oxide, at least one curing catalyst, wherein tin oxide expressed as SnOz and titanium oxide expressed as TiO₂ are present in the composition in a weight ratio of TiO₂/(TiO₂+SnO₂) ranging from 35 % to 75 %. The resulting coating can be formed on an optical article.

## Description

The present invention relates to curable compositions for preparing transparent abrasion- and/or scratch-resistant coatings, articles exhibiting abrasion- and/or scratch-resistance properties coated therewith, in particular optical and ophthalmic lenses for eyeglasses, and a process to prepare such articles.

Optical articles made of a transparent, organic material, or organic glass, which is lighter than mineral glass, are nowadays broadly used. However, organic optical articles suffer from being more sensitive to scratch and abrasion as compared to traditional mineral optical articles.

In general, a method to increase the abrasion and/or scratch resistance of an optical article is the application at its surface of a hard coating. Hard coats used to protect the surface of organic glasses are typically hard coatings of poly(meth)acrylic type or based on silane hydrolyzates.

The application EP 0614957 describes compositions comprising a hydrolysate of a silane having an epoxy moiety and three alkoxy moieties directly bound to the silicon atom, a hydrolysate of a silane having two unreactive groups connected to the silicon atom through a Si-C bond and two hydrolyzable moieties directly bound to the silicon atom, colloidal silica, an aluminum compound catalyst, in a solvent medium. However, this hard coat does not provide the substrate with protection from UV light.

US 6808812 describes a composition for an abrasion-resistant or scratch-resistant coating, comprising the reaction product of oxalic acid with an organometallic derivative, preferably a titanate such as tetra-isopropoxytitanium, an epoxyalkoxysilane such as γ-glycidoxypropyl trimethoxysilane (GLYMO) and optionally a second alkoxysilane such as dimethyl diethoxysilane (DMDES).

JP S59-115366 discloses an optical lens having a cured film made of a mixture of an epoxyalkoxysilane or partial hydrolysate thereof, a silicon compound or partial hydrolysate thereof such as tetramethoxysilane or methyltrimethoxysilane, fine inorganic particles having a particle size of 200 nanometers or less and a refractive index of 1.6 or greater, such as TiO₂ or Al₂O₃, a metal catalyst and/or a cross-linking agent such as SnCl₂, and optional monomers or polymers such as an epoxy-containing compound, an acrylic-containing compound, a styrene-containing compound, or a melamine-containing compound. The cured film provides improved properties such as surface hardness, wear resistance, chemical resistance, corrosion resistance, and weather resistance.

Hard coats comprising colloidal particles of TiO₂ provide protection from UV degradation to light sensitive substrates. However, problems are observed when titanium oxide is used as a metal oxide for a hard coat layer. This phenomenon is known as photoactivation effect. Titanium oxide is activated when receiving light energy (ultraviolet rays) and tends to decompose organic substances contained in the hard coat composition, such as organic silanes or dyes, due to its strong oxidative power, which generates cracks in the coating.

Further, cracks are believed to make water penetrate into the coating, rendering it more sensitive to moisture, while hard coats having an insufficient resistance to water are subject to delamination, reducing the durability of the coating.

Replacing titanium oxide with another high refractive index material with no (or low) photocatalytic activity such as SnO₂ or ZrO₂ is not satisfactory. While it reduces the appearance of cracks, it also removes protection of substrates from UV light, which generates yellowing or peeling issues after UV exposure.

Thus, there is a need to improve the reliability of abrasion- and/or scratch-resistant coatings under certain conditions of humidity and UV exposure.

It is therefore an objective of the present invention to provide a transparent optical article, particularly an ophthalmic lens, comprising a substrate in mineral or organic glass and a coating providing it with scratch resistance and/or abrasion resistance properties, with high durability, low tendency of said coating to crack formation, a reduced risk of peeling, low water sensitivity, while still protecting substrates from UV light and maintaining other performances such as the transparency required for being applicable to the optics field, low haze, as well as a good adhesion to the other layers formed on the substrate.

It is a further objective of the present invention to provide a method for making such optical articles, which may be easily integrated into the usual production process for optical articles.

The inventors discovered that a combination of two high refractive index colloids and two organic silanes provided hard coats resistant to wear, weathering, and protecting UV-sensitive optical substrates. Interestingly, these improvements do not generate significant counterparts in terms of light diffusion, adhesion and resistance to abrasion and scratch of the hard coat.

To address the needs of the present invention and to remedy to the mentioned drawbacks of the prior art, the applicant provides a curable composition for an abrasion-and/or scratch-resistant coating, comprising:
(a) at least one epoxy compound bearing at least one silicon atom having at least one hydrolyzable group directly linked to the silicon atom and at least one group comprising an epoxy function linked to the silicon atom through a carbon atom, and/or a hydrolyzate thereof,
(b) at least one silane compound of formula (II), and/or a hydrolyzate thereof: 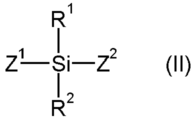 in which Z¹ and Z² independently represent a hydrolyzable group or a hydrogen atom, R¹ and R² independently represent a monovalent organic group linked to the silicon atom through a carbon atom and that does not contain any epoxy group,
(c) colloidal particles of metal oxide or metalloid oxide, comprising (c1) colloidal particles of titanium oxide, and (c2) colloidal particles of tin oxide,
(d) at least one curing catalyst,
wherein compounds (b) are present in an amount ranging from 1 to 10 %, relative to the dry extract weight of the composition, and wherein tin oxide expressed as SnO₂ and titanium oxide expressed as TiO₂ are present in the composition in a weight ratio of TiO₂/(TiO₂+SnO₂) ranging from 35 % to 75 %.

The present composition combines two colloids, i.e., TiO₂, which acts as a barrier protecting UV-sensitive substrates, and SnO₂, having low or no photocatalytic activity, thus preventing the appearance of cracks in the resulting coating while ensuring a high refractive index coating. Further, the use of a small amount of silane (b) bearing two organic groups reduces the water sensitivity of the coating as compared to coatings only comprising epoxysilanes (a) as silane compounds, and softens the matrix of the coating, thus avoiding cracking thereof after polymerization.

Further objects of the invention are an optical article coated with an abrasion-and/or scratch-resistant coating obtained from the above composition, and a process for the manufacture thereof.

### Detailed description of the invention

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about".

When an optical article comprises one or more surface coatings, the phrase "to deposit a coating or layer onto the optical article" means that a coating or layer is deposited onto the outermost coating of the optical article, i.e., the coating that is the closest to the air.

In the present application, a coating that is "on" a substrate/coating or which has been deposited "onto" a substrate/coating is defined as a coating that (i) is positioned above the substrate/coating, (ii) is not necessarily in contact with the substrate/coating, that is to say one or more intermediate coatings may be arranged between the substrate/coating and the coating in question (however, it is preferably in contact with said substrate/coating), and (iii) does not necessarily completely cover the substrate/coating. When "a layer 1 is arranged under a layer 2", it is intended to mean that layer 2 is more distant from the substrate than layer 1.

The term "coating" is understood to mean any layer, layer stack or film, which may be in contact with the substrate and/or with another coating, for example a sol-gel coating or a coating made of a purely organic resin. A coating may be deposited or formed through various methods, including wet processing, gaseous processing, and film transfer.

In the present application, a layer or compound is said to have a high refractive index when its refractive index is higher than or equal to 1.55, preferably higher than or equal to 1.56, more preferably ranging from 1.57 to 1.65, even more preferably ranging from 1.58 to 1.62.

### Compound (a)

The curable composition according to the invention is generally liquid and comprises at least one compound (a), which is an epoxy compound bearing at least one silicon atom having at least one hydrolyzable group directly linked to the silicon atom and at least one group comprising an epoxy function linked to the silicon atom through a carbon atom, and/or a hydrolyzate thereof.

Compound (a) is used as a binder. The binder is defined as a film-forming material, which is capable of improving adhesion of the coating to the underlying layer and/or the upper layer, and/or integrity of the coating.

Compound (a) preferably has from 2 to 6, more preferably 2 or 3 functional groups generating a silanol group under hydrolysis. Said compound is considered as being an organic compound, and preferably has formula (I):

R_{n'}YₘSi(X)_{4-n'-m} (I)

in which the R groups are identical or different and represent monovalent organic groups linked to the silicon atom through a carbon atom and that do not contain any epoxy group, the Y groups are identical or different and represent monovalent organic groups linked to the silicon atom through a carbon atom and containing at least one epoxy group, the X groups are identical or different and represent hydrolyzable groups or hydrogen atoms, m and n' are integers such that m is equal to 1 or 2 and n' + m = 1 or 2.

The integers n and m define three groups of compounds (I): compounds of formula RYSi(X)₂, compounds of formula Y₂Si(X)₂, and compounds of formula YSi(X)₃. Among these compounds, epoxysilanes having the formula YSi(X)₃ are preferred.

The monovalent R groups linked to the silicon atom through a Si-C bond are organic groups. These groups may be, without limitation, hydrocarbon groups, either saturated or unsaturated, preferably C₁-C₁₀ groups and better C₁-C₄ groups, for example an alkyl group, preferably a C₁-C₄ alkyl group such as methyl or ethyl, an aminoalkyl group, an alkenyl group, such as a vinyl group, a C₆-C₁₄ aryl group, for example an optionally substituted phenyl group, in particular a phenyl group substituted with one or more C₁-C₄ alkyl groups, a benzyl group, a (meth)acryloxyalkyl group.

The most preferred R groups are alkyl groups, in particular C₁-C₄ alkyl groups, and ideally methyl groups.

A "hydrolyzable group" born by a silicon atom is a chemical group which will transform into a OH group when exposed to hydrolysis conditions. It is worth noting that SiOH bonds may be initially present in the compounds of formula (I), which are considered in this case as hydrolyzates. Hydrolyzates also encompass siloxane salts.

The term "hydrolyzate" of a silane derivative expresses the fact that it is also possible in the context of the present invention that the silane derivative has already been at least partly hydrolyzed to form silanol groups, and a certain degree of crosslinking may also have already taken place through condensation reaction of these silanol groups.

The X groups may independently and without limitation represent alkoxy groups -O-R¹, wherein R' preferably represents a linear or branched alkyl or alkoxyalkyl group, preferably a C₁-C₄ alkyl group, acyloxy groups -O-C(O)R³, wherein R³ preferably represents an alkyl group, preferably a C₁-C₆ alkyl group, and more preferably a methyl or ethyl group, halogen groups such as Cl and Br, amino groups optionally substituted with one or two functional groups such as an alkyl or silane group, for example the NHSiMe₃ group, alkylenoxy groups such as the isopropenoxy group. Hydroxyl groups are considered as being hydrolyzable groups.

Most preferred epoxysilanes are those wherein, in formula (I), n'=0, m=1 and X is a C1-C5 alkoxy group, preferably OCH₃.

The monovalent Y groups linked to the silicon atom through a Si-C bond are organic groups since they contain at least one epoxy function, preferably one epoxy function. By epoxy function, it is meant a group of atoms, in which an oxygen atom is directly linked to two adjacent carbon atoms or non-adjacent carbon atoms comprised in a carbon containing chain or a cyclic carbon containing system. Among epoxy functions, oxirane functions are preferred, i.e., saturated three-membered cyclic ether groups.

Epoxysilanes compounds of formula (I) provide a highly cross-linked matrix. The preferred epoxysilanes have an organic link between the Si atom and the epoxy function that provides a certain level of flexibility.

The preferred Y groups are groups of formulae III and IV: 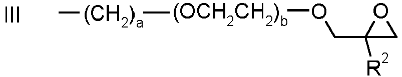 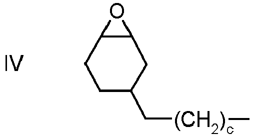 in which R² is an alkyl group, preferably a methyl group, or a hydrogen atom, ideally a hydrogen atom, a and c are integers independently ranging from 1 to 6, and b is 0, 1 or 2.

The preferred group having formula III is the γ-glycidoxypropyl group (R² = H, a = 3, b = 0) and the preferred (3,4-epoxycyclohexyl)alkyl group of formula IV is the β-(3,4-epoxycyclohexyl)ethyl group (c = 1). The γ-glycidoxyethoxypropyl group may also be employed (R² = H, a = 3, b = 1).

Preferred epoxysilanes of formula (I) are epoxyalkoxysilanes, and most preferred are those having one Y group and three alkoxy X groups. Particularly preferred epoxytrialkoxysilanes are those of formulae V and VI: 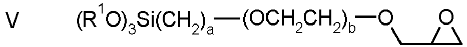 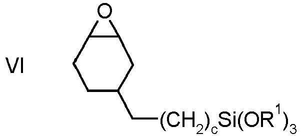 in which R' is an alkyl group having 1 to 6 carbon atoms, preferably a methyl or ethyl group, and a, b and c are such as defined above. In some embodiments, a is 3. In some embodiments b is 0.

Examples of such epoxysilanes include but are not limited to γ-glycidoxymethyl trimethoxysilane, γ-glycidoxymethyl triethoxysilane, γ-glycidoxymethyl tripropoxysilane, γ-glycidoxyethyl trimethoxysilane, γ-glycidoxyethyl triethoxysilane, γ-glycidoxyethyl tripropoxysilane, γ-glycidoxypropyl trimethoxysilane, γ-glycidoxypropyl triethoxysilane, γ-glycidoxypropyl tripropoxysilane, γ-glycidoxypropyl methyldiethoxysilane, γ-glycidoxypropyl methyldimethoxysilane, 2-(3,4-epoxycyclohexyl) ethyltrimethoxysilane, 2-(3,4-epoxycyclohexyl) ethyltriethoxysilane. Other useful epoxytrialkoxysilanes are described in Patents US 4,294,950, US 4,211,823, US 5,015,523, EP 0614957, US 2009/0311518, US 2011/0058142 (compounds of formulae I, VII and VIII) and WO 94/10230. Among those silanes, γ-glycidoxypropyltrimethoxysilane (GLYMO) is preferred.

In one embodiment, the composition comprises at least one compound (a) of formula RYSi(X)₂, R, Y and X being as defined above. The compound (a) of formula RYSi(X)₂ can be used as a single compound (a) or as a mixture with one or more other compounds (a), such as compounds (a) of formula YSi(X)₃, Y being as defined above. In one embodiment, the composition comprises at least one compound (a) of formula RYSi(X)₂ and at least one compound (a) of formula RYSi(X)₂. Compounds (a) of formula RYSi(X)₂ being more hydrophobic than compounds (a) of formula YSi(X)₃ (r being a monovalent organic group), they have the ability of limiting the sensitivity to water of the resulting abrasion- and/or scratch-resistant coating. The preferred compounds (a) of formula RYSi(X)₂ are γ-glycidoxypropyl methyldiethoxysilane and γ-glycidoxypropyl methyldimethoxysilane.

In one embodiment of the invention, hydrolysis-polymerizable compound (a) is hydrolyzed before being mixed to the other components of the composition. The hydrolysis may be performed as known in the art of sol-gel processing, such as disclosed in FR 2702486 or US 4211823. Acidic catalysts such as hydrochloric acid or acetic acid may be used to promote the hydrolysis reaction, in the presence of water.

The above described organofunctional compounds form silica organosols. After having been subjected to hydrolysis, they generate interpenetrated networks by forming silanol groups, which are capable of establishing bonds with the underlying layer and may act as adhesion promoters. They may also act as cross-linking agents towards other compounds present in the composition such as compounds (b).

Despite the epoxysilane is generally under hydrolyzed form, the amount of epoxysilane will be conventionally defined as the weight of the initial precursor before its hydrolysis. Hydrolysis of alkoxy groups liberates the associated alcohol to form silanol groups which will condense spontaneously. Preferably, an alkoxysilane is reacted with a stoichiometric amount of water to hydrolyze the hydrolyzable groups, typically the alkoxy groups.

The composition preferably comprises from 10 to 30 % by weight of compounds (a), more preferably from 15 to 28 %, even more preferably from 18 to 27 %, relative to the total weight of the composition.

In one embodiment, the composition comprises from 75 to 95 % by weight of compounds (a), more preferably from 80 to 92 %, even more preferably from 82 to 90 %, relative to the total weight of polymerizable compounds present in the composition.

The composition preferably comprises from 25 to 65 % by weight of compounds (a), more preferably from 30 to 60 %, even more preferably from 35 to 55 %, relative to the dry extract weight of the composition.

### Compound (b)

The curable composition comprises at least one compound (b), used to increase hydrophobicity, which is a silane compound of formula (II), and/or a hydrolyzate thereof: 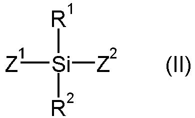 in which Z¹ and Z² independently represent a hydrolyzable group or a hydrogen atom, R¹ and R² independently represent a monovalent organic group linked to the silicon atom through a carbon atom that does not contain any epoxy group.

The monovalent R¹ and R² groups linked to the silicon atom through a Si-C bond may be, without limitation, hydrocarbon groups, either saturated or unsaturated, preferably C₁-C₁₀ groups and better C₁-C₄ groups, for example an alkyl group, preferably a C₁-C₄ alkyl group such as methyl or ethyl, an aminoalkyl group, an alkenyl group, such as a vinyl group, a C₆-C₁₄ aryl group, for example an optionally substituted phenyl group, in particular a phenyl group substituted with one or more C₁-C₄ alkyl groups, a benzyl group, a (meth)acryloxyalkyl group.

An "aryl group" is an unsaturated hydrocarbon group comprising a formal alternation of single and double bonds, and respecting the Hückel's aromaticity rule.

The most preferred R¹ and R² groups are alkyl groups, in particular C₁-C₄ alkyl groups, and ideally methyl groups.

In one embodiment, the R' and/or R² groups do not contain any group capable of reacting with a silanol group, such as a OH or SiOH group or a bridging group other than an epoxy group. In one embodiment, the R' and/or R² groups are non-substituted alkyl or aryl groups.

The Z¹ and Z² groups, which can react to give an OH group upon hydrolysis of the silane of formula (II), may independently and without limitation represent alkoxy groups -O-R¹, wherein R' preferably represents a linear or branched alkyl or alkoxyalkyl group, preferably a C₁-C₄ alkyl group, acyloxy groups -O-C(O)R³, wherein R³ preferably represents an alkyl group, preferably a C₁-C₆ alkyl group, and more preferably a methyl or ethyl group, halogen groups such as Cl and Br, amino groups optionally substituted with one or two functional groups such as an alkyl or silane group, for example the NHSiMe₃ group, alkylenoxy groups such as the isopropenoxy group. Hydroxyl groups are considered as being hydrolyzable groups.

In one embodiment, the R¹ and R² groups in formula (II) independently represent an alkyl group, and the Z¹ and Z² groups independently represent an alkoxy group.

Most preferred compounds (b) are those wherein, Z¹ and Z² independently represent a C1-C5 alkoxy group, preferably OCH₃, and/or R¹ and R² independently represent a C1-C4 alkyl group. Preferred silane compounds (b) of formula (II) are dimethyldiethoxysilane, dimethyldimethoxysilane and methylphenyldimethoxysilane, dimethyldiethoxysilane (DMDES) being the most preferred. γ-chloropropyl methyldimethoxysilane, vinylmethyldiethoxysilane, vinylmethyl diacetoxysilane, 3-acryloxypropylmethyl-dimethoxysilane, 3-acryloxypropyl-methylbis (trimethylsiloxy) silane, 3-methacryloxypropyl-methyldimethoxysilane, 3-methacryloxypropyl-methyldiethoxysilane, 3-methacryloxypropyl bis (trimethylsiloxy) methylsilane, methacryloxymethyl bis(trimethylsiloxy) methylsilane, 3-amino propyl methyl dimethoxy silane, 3-(2-amino ethyl) amino propyl methyl dimethoxy silane, 3-amino propyl methyl diethoxysilane can also be used.

The composition preferably comprises from 0.5 to 9 % by weight of compounds (b), more preferably from 1 to 7 %, even more preferably from 2 to 5 %, relative to the total weight of the composition.

In one embodiment, the composition comprises from 5 to 25 % by weight of compounds (b), more preferably from 8 to 20 %, even more preferably from 10 to 18 %, relative to the total weight of polymerizable compounds present in the composition.

Compounds (b) are present in an amount ranging from 1 to 10 %, relative to the dry extract weight of the composition, preferably from 2 to 9 %, 3 to 7 % or 4 to 6 %, relative to the dry extract weight of the composition.

Compounds (b) are more hydrophobic than compounds (a). As compared to prior art hard coat compositions, a part of the epoxysilane compound (a) forming the matrix of the coating has been replaced with a more hydrophobic silane compound (b), thus reducing water sensitivity of the coating and the possibility of delamination.

Without wishing to be bound by any theory, it is believed that hard coats having a matrix formed from epoxysilane compounds (a), having an affinity to water, can swell by absorbing water from ambient humidity or sweat, putting the most fragile interface(s) of the optical article under stress, resulting in coating peeling.

In the present invention, compounds (a) and (b) are preferably present in the composition in a weight ratio of compound (b) / compound (a) ranging from 8 % to 25 %, more preferably from 10 to 20 %, 12 to 20 % or 13 to 18 %.

In the present invention, compounds (a) and (b) are preferably present in the composition in such an amount that the ratio dry extract weight of compound (b) / dry extract weight of compound (a) ranges from 6 % to 18 %, more preferably from 7 to 16 %, 8 to 15 % or 9 to 13 %.

Such ratios secure a low water sensitivity of the coating.

Hard coats prepared from compositions according to the invention comprising at least one compound (b) exhibit adhesion, transparence, abrasion- and scratch-resistance properties, which are generally similar to or higher than those obtained from the corresponding compositions without any compound of formula (b), although compound (b) is used at relatively low concentrations in the present composition.

### Compound (c)

The curable composition comprises at least one compound (c), which comprises colloidal particles of metal oxide or metalloid oxide, comprising (c1) colloidal particles of titanium oxide, and (c2) colloidal particles of tin oxide.

Such particles increase the hardness of the coating, and optionally adapt the refractive index of the resulting coating. They are used under a colloidal form.

Colloidal particle preparation requires well known methods. As used herein, "colloids" are fine particles (nanoparticles), the mean diameter of which (or the largest size of which in case of elongated particles) is less than 150 nm, more preferably less than 100 nm, dispersed within a liquid dispersing medium, either aqueous or organic, such as water, an alcohol, a ketone, an ester or combinations thereof, preferably an alcohol such as methanol, ethanol or isopropanol. With such low mean particle diameter, the transparency of the coating is not affected. Preferred colloidal particle diameters range from 2 to 100 nm, from 2 to 50 nm or from 5 to 40 nm. The size of the particles in the liquid is determined by conventional methods such as light scattering, and particles size analyzer. The size of the particles in the solid is determined by tunneling electron microscope or light scattering.

The colloidal particles (c1) and/or (c2) may include a homogeneous or heterogeneous population of particles, and may include particles of different sizes, different natures, or both. In this way, the user may incorporate multiple kinds of particles with multiple kinds of functionalities to deliver various properties in accordance with the final use of the product.

In some embodiments, colloidal particles may be made of a mixture of small sized-particles, for example having a diameter of from 10 to 15 nm and of larger sized- particles, for example having a diameter of from 30 to 80 nm.

The colloidal particles of titanium oxide (c1) and the colloidal particles of tin oxide (c2) can be introduced in the composition as two different colloids or as a single colloid comprising both types of particles.

In one embodiment, the colloidal particles (c2) comprise SnO₂ particles.

These particles may be modified by grafting an organic group, especially onto a silicon atom.

The particles may also be composite oxide particles based on two or more metal oxides or metalloid oxides.

In one embodiment, the composite particles have a core/shell structure. One or several shells of identical or different metal oxides and/or metalloid oxides can be formed around the core of the particle. Said core can be formed of one metal oxide or metalloid oxide, or can be a mixture or a composite of several metal oxides and/or metalloid oxides. In another embodiment, the composite particles are Janus particles.

Composites such as SiO₂/TiO₂, SnO₂/TiO₂, SiO₂/SnO₂/TiO₂, SiO₂/ZrO₂, SiO₂/TiO₂/ZrO₂, SiO₂/SnO₂, or TiO₂/SiO₂/ZrO₂/SnO₂ may be employed.

In one embodiment, the colloidal particles of titanium oxide (c1) comprise composite particles of titanium oxide, which preferably do not contain tin oxide. Composite particles are particles of multi-component oxides, in which the respective amounts of oxides can be varied to change the refractive index of the particle. The composite particles of titanium oxide are preferably composite particles of titanium oxide, zirconium oxide and silicon oxide, which preferably do not contain tin oxide. An example of commercially available colloidal particles having a composite structure based on TiO₂, ZrO₂ and SiO₂ is the colloid Optolake 1120Z^{®} (S-95/A8) from JGC catalysts with core-shell structure. This colloid is disclosed in JP 2009-197078 as a methanol dispersion sol containing 20 wt% titanium-based composite oxide fine particles containing titanium, silicon, and zirconium (titanium dry content expressed as TiO₂ approximately 48.8 wt%).

In one embodiment, the colloidal particles of titanium oxide and the colloidal particles of tin oxide are distinct particles. In one embodiment, the curable composition is prepared by separately adding in the mixture the colloidal particles of titanium oxide (c1) and the colloidal particles of tin oxide (c2). In one embodiment, the colloidal particles of titanium oxide (c1) do not contain tin oxide. In another embodiment, the colloidal particles of tin oxide (c2) do not contain titanium oxide.

In one embodiment, the colloidal particles of tin oxide (c2) comprise composite particles of tin oxide, which preferably do not contain titanium oxide.

In one embodiment, the colloidal particles of titanium oxide (c1) and the colloidal particles of tin oxide (c2) are provided in a composite sol comprising composite particles of titanium oxide and tin oxide, such as composite particles of titanium oxide, tin oxide, zirconium oxide and silicon oxide. An example of commercially available colloidal particles having a composite structure based on TiO₂, SnO₂, ZrO₂ and SiO₂ is the colloid Optolake 1120Z^{®} (11RU7-A-8) from JGC catalysts with core-shell structure. It is disclosed, e.g., in the patent application JP H11-310755.

Another example of a commercially available colloid containing particles of TiO₂, SnO₂, ZrO₂ and SiO₂ is the colloid HT-R305M7-20 from Nissan Chemical Industries, disclosed, e.g., in US 2019/092681.

Another example of such composite particles of titanium oxide and tin oxide is disclosed in the patent application JP 2000-204301, which is directed to composite particles composed of (i) core particles of tin oxide and titanium oxide, and (ii) a covering layer covering the core particles composed of silicon oxide and an oxide of zirconium and/or aluminum, in particular composite particles having a core/shell structure with a core of tin oxide and titanium oxide in the form of rutile and a shell comprising a mixture of silicon oxide and zirconium oxide.

Hybrid particles having a metal or metalloid core and at least one polymer shell can also be used, such as reactive core-shell particles having at least one metal oxide or metalloid oxide as the core and a polymerizable material as the shell, such as a pre-polymer. The reactive groups of the latter particles may react with each other under thermal or UV treatment or further crosslink with reactive material of the composition, such as polymerizable compounds (a) and/or (b), during the preparation of the coating, providing a dense network and thus a harder substrate surface.

Compound (c) can comprise colloidal particles of metal oxide or metalloid oxide different from tin oxide and titanium oxide. Non-limiting examples of such oxide colloidal particles include particles of silicon oxide (preferably SiO₂), aluminum oxide, zirconium oxide, alumina-doped silicon oxide, indium-doped tin oxide (ITO), antimony-doped tin oxide (ATO), aluminum-doped zinc oxide, zinc oxide (ZnO), indium oxide (In₂O₃), Sb₂O₃, MgO, Sb₂O₃, Y₂O₃, Ta₂O₅, La₂O₃, Fe₂O₃, WO₃, vanadium pentoxide, cerium oxide, zinc antimonate, indium antimonate or a mixture of two or more thereof, colloidally dispersed in a dispersion medium.

In a preferred embodiment, compound (c) comprises colloidal particles of silicon oxide such as silica. Silicon oxide can be present in composite particles with other metal/metalloid oxides or in non-composite particles. Silica colloids are marketed by DuPont de Nemours under the commercial name Ludox^{®}.

In one embodiment, compound (c) comprises colloidal particles of zirconium oxide such as ZrO₂. Zirconium oxide can be present in composite particles with other metal/metalloid oxides or in non-composite particles.

The composition preferably comprises from 4 to 25 % by weight of colloidal particles of metal oxide or metalloid oxide (excluding the weight of solvent present in the colloids), i.e., compounds (c), more preferably from 6 to 20 %, even more preferably from 8 to 18 % or 10 to 15 %, relative to the total weight of the composition. Compounds (c) are generally present in an amount ranging from 30 to 70 %, preferably from 35 to 65 %, more preferably from 37 to 60 %, even more preferably from 38 to 52 %, relative to the dry extract weight of the composition.

In the present invention, tin oxide expressed as SnO₂ and titanium oxide expressed as TiO₂ are present in the composition in a weight ratio of TiO₂/(TiO₂+SnO₂) ranging from 35 % to 75 %, more preferably from 40 to 70 %, 44 to 65 % or 46 to 60 %. Such ratios secure a low yellowing of the coating while avoiding cracks appearance, as the presence of tin oxide limits photocatalytic degradation of organic substances.

In one embodiment, titanium oxide expressed as TiO₂ is present in the composition in an amount ranging from 10 to 22 %, relative to the dry extract weight of the composition, preferably from 12 to 20 % or 14 to 18 %.

In one embodiment, titanium oxide expressed as TiO₂ is present in the composition in an amount ranging from 1 to 11 % by weight, relative to the total weight of the composition, preferably from 2 to 9 % or 4 to 7 %.

In one embodiment, tin oxide expressed as SnO₂ is present in the composition in an amount ranging from 7 to 19 %, relative to the dry extract weight of the composition, preferably from 9 to 17% or 11 to 16%.

In one embodiment, tin oxide expressed as SnO₂ is present in the composition in an amount ranging from 1 to 10 % by weight, relative to the total weight of the composition, preferably from 2 to 8 % or 3 to 7 %.

In one embodiment, silicon oxide expressed as SiO₂ is present in the composition in an amount ranging from 3 to 19 %, relative to the dry extract weight of the composition, preferably from 4 to 17 % or 5 to 15 %.

In one embodiment, silicon oxide expressed as SiO₂ is present in the composition in an amount ranging from 1 to 10 % by weight, relative to the total weight of the composition, preferably from 1.3 to 8% or 1.5 to 6 %.

In one embodiment, zirconium oxide expressed as ZrO₂ is present in the composition in an amount ranging from 0.5 to 10 %, relative to the dry extract weight of the composition, preferably from 1 to 8 % or 2 to 6 %.

In one embodiment, zirconium oxide expressed as ZrO₂ is present in the composition in an amount ranging from 0.25 to 5 % by weight, relative to the total weight of the composition, preferably from 0.5 to 4 % or 1 to 3 %.

The expression "expressed as" or "converted to" indicates that the metal or metalloid oxide, such as tin oxide or titanium oxide, is not necessarily present in the composition as an individual oxide, but can be present in a complex oxide mixture, especially when composite particles of oxides are used. Therefore, for practical reasons, weight amounts of metal or metalloid oxide such as tin oxide or titanium oxide can be indicated by expressing the titanium or tin component (or other oxide components) respectively as TiO₂ or SnOz.Obviously, when colloid (c1) comprises colloidal particles of TiO₂, and (c2) colloidal particles of SnO₂, no conversion has to be made.

In one embodiment, the ratio (dry extract weight of colloidal particles of titanium oxide) / (dry extract weight of colloidal particles of titanium oxide + dry extract weight of colloidal particles of tin oxide) ranges from 50 % to 85 %, more preferably from 55 % to 80 %, 60 % to 75 % or 65 % to 75 %. Such ratios secure a low yellowing of the coating while avoiding cracks appearance.

### Compound (d)

The curable composition comprises at least one compound (d), which is a curing catalyst. The catalyst is a system for accelerating the polymerization reactions taking place, i.e., polycondensation and/or cross-linking reactions of epoxy compounds and/or siloxane compounds. It is generally a thermally activated condensation catalyst.

Preferred catalysts found to be able to cure the composition at temperatures low enough (preferably ≤ 110°C, more preferably ≤ 100°C) so as not to damage the underlying substrate or cause adverse effects to other coatings or coating components include (strong) acid catalysts (such as the Lewis acids disclosed in US 2013/274381), ammonium salts of metal anions and aluminum-based compounds, designed for ring opening polymerization of cyclic ether groups.

In a preferred embodiment, catalyst (d) is chosen from aluminum chelates, aluminum acylates, aluminum alkoxides, and siloxy aluminum compounds. The composition does preferably not contain other epoxy ring-opening catalysts such as acid catalysts or ammonium salts of metal anions when those aluminum compounds are employed.

Aluminum acylates, siloxy aluminum compounds and aluminum alkoxides are respectively of preferred general formulae Al(OC(O)R)ₙ(OR')₃₋ₙ, Al(OC(O)R)ₙ(OSiR"₃)₃₋ₙ and Al(OSiR"₃)ₙ(OR')₃₋ₙ, wherein R and R' are linear or branched chain alkyl groups containing from 1 to 10 carbon atoms, R" is a linear or branched chain, alkyl group containing from 1 to 10 carbon atoms, a phenyl moiety, an acylate moiety of formula OC(O)R, wherein R is as defined just hereabove, and n is an integer from 1 to 3. Preferably, R' is an isopropyl or ethyl group, R and R" are methyl groups.

Aluminum chelates may be formed by reacting an aluminum alkoxide or acylate with chelating agents free from nitrogen or sulfur, comprising oxygen as a coordinating atom, for example acetylacetone, ethyl acetoacetate or diethyl malonate. They may be chosen from aluminum acetylacetonate noted Al(AcAc)₃, ethyl mono(acetoacetate) aluminum bisacetylacetonate, ethyl bis(acetoacetate) aluminum monoacetyl acetonate, di-n-butoxy aluminum ethyl mono(acetoacetate) and di-i-propoxy aluminum ethyl mono(acetoacetate). Other examples of useful catalysts are given in the patent EP 0614957. When the catalyst is an aluminum chelate, the coating composition preferably comprises an organic solvent which boiling temperature at atmospheric pressure does range from 70 to 140°C, for example ethanol, isopropanol, ethyl acetate, methylethylketone or tetrahydropyrane.

Other metal complex catalysts can also be used, such as iron acetylacetonate or zinc acetylacetonate.

The catalyst is generally used in amounts ranging from 0.01-5 % by weight based on the weight of the composition, preferably from 0.1 to 3.5 % by weight, more preferably from 0.2 to 3 % by weight.

The compositions of the present invention advantageously further contain small amounts, preferably from 0.005 to 1 % by weight, based on the total weight of the composition, of at least one non-ionic or ionic surface active compound (surfactant), more preferably from 0.02 to 0.8 %, still more preferably from 0.05 to 0.5 %. The surfactant is important for good wetting of the substrate resulting in satisfactory cosmetics of the final coating. Said surfactant can include for example polyether-modified polydimethylsiloxane, poly(alkylene glycol)-modified polydimethylsiloxanes or polyheptamethylsiloxanes, or fluorocarbon-modified polysiloxanes. Preferred surfactants are polyether-modified polydimethylsiloxane such as BYK^{®}-3752 supplied by BYK, fluorinated surfactant such as Novec^{®} FC-4434 from 3M (non-ionic surfactant comprising fluoroaliphatic polymeric esters), Unidyne^{™} NS-9013, and EFKA^{®} 3034 from CIBA (fluorocarbon-modified polysiloxane). Useful fluorinated surfactants are disclosed in WO 2010/076314.

The composition generally contains at least one solvent, in addition to the solvent(s) present in colloid component (c). The at least one solvent present in the composition is preferably an alcohol, such as an alkanol (methanol, ethanol, propanol...) or a glycol monoether (e.g., Dowanol PM^{®} from Dow Chemical), a ketone (such as methyl ethyl ketone), propylene carbonate or water. The solvent is preferably an organic solvent such as methanol or a ketone, or a hydroalcoholic mixture.

The total amount of solvent depends on the components used, on the type of optical article and on the coating process. The purpose of the solvent is to achieve good surface wetting and a specific coating viscosity range determined by the coating equipment used to achieve a specific coating thickness range. The solvent or mixture of solvents typically represents from 25 to 80 % of the weight of the composition, preferably from 35 to 75 %, more preferably from 50 to 65 %.

The composition according to the invention generally contains 20-50 % by weight of solids (dry extract weight relative to the weight of the composition), preferably from 25 to 45 %, more preferably from 30 to 40 %.

The dry extract weight content of a compound of the composition represents the content of this compound in the final coating. The dry extract weight can be calculated as a theoretical dry extract weight as disclosed in US 2012/0295084 or EP 614957. Typically, it is, for a hydrolyzable silane compound, the calculated weight as expressed in QₖSiO_{(4-k)/2} units wherein Q is an organic moiety directly bound to the silicon atom through a Si-C bond, k is 0, 1, 2 or 3, and QₖSiO_{(4-k)/2} results from the hydrolysis of QₖSiR‴₍₄₋ₖ₎ where Si-R‴ gives Si-OH upon hydrolysis.

The dry extract can also be determined experimentally. The dry extract of a compound or composition is the total weight of the compound or composition after the full removal of volatile species at 100°C to 110°C in an oven, preferably at 100°C. The dry extract is also called solids content, percent nonvolatile material by weight or % NVM. Traditional procedures to determine solids take 60 min at 105°C to 110°C in an oven, and require both pre-and post-weighing of the sample pan and sample (ASTM designations: D2369 and D2926-80). The procedures using the commercial Mark 3 solids analyzer purchased from Sartorius, or SMART Turbo^{™} purchased from CEM, take only 2 to 10 minutes, depending on the volatile/moisture content and viscosity of the material.

In addition to main components (a), (b), (c), and (d), the composition can further include various additives conventionally used in polymerizable compositions, in conventional proportions. These additives include further curing/cross-linking agents (e.g., silane coupling agents or comonomers such as polyamines, polythiols, polyols, polycarboxylic acids), photochromic agents, lubricants, rheology modifiers, flow and leveling additives, wetting agents, antifoaming agents, stabilizers, pH regulators, dyes, pigments, UV absorbers and free radical scavengers (such as hindered amine light stabilizers and antioxidants).

Its advantages are numerous and include applicability to most of substrates with good adhesion, in particular plastic substrates, and the production of optical articles having high transmittance, low haze, improved abrasion- and/or scratch-resistance as compared to a same optical article without said abrasion- and/or scratch-resistant coating, increased durability, resistance to fracturing throughout wear, while maintaining excellent adhesion of the coatings.

The present invention also relates to the abrasion and/or scratch-resistant coating itself, independently of the substrate on which it is coated.

The invention also relates to an optical article comprising a substrate having at least one main surface coated with an abrasion- and/or scratch-resistant coating, wherein the abrasion- and/or scratch-resistant coating is formed from a curable composition as described above. It will be sometimes referred to in this patent application as the "hard coat composition".

The abrasion-and/or scratch-resistant coating according to the invention has preferably a refractive index higher than or equal to 1.5, more preferably higher than or equal to 1.55 or 1.60.

The optical article prepared according to the present invention is a transparent optical article, preferably an optical lens or lens blank, and more preferably an ophthalmic lens or lens blank. Said ophthalmic lens may be a polarized lens, or a solar, tinted lens, with a corrective action or not.

The optical article may be coated on its convex main face (front side), concave main face (back/rear side), or both faces with the abrasion- and/or scratch-resistant coating according to the invention, preferably on the convex (front) main face, so as to avoid multiple reflections of light arriving on the lens. As used herein, the rear face of the substrate is intended to mean the face which, when using the article, is the nearest from the wearer's eye, in the cases of ophthalmic lenses. It is generally a concave face. On the contrary, the front face of the substrate is the face which, when using the article, is the most distant from the wearer's eye. It is generally a convex face. The optical article can also be a plano article.

In an embodiment, the optical article according to the invention is coated on both faces (front and rear main faces) with abrasion- and/or scratch-resistant coatings according to the invention. The coatings may be identical or different.

Herein, the term "lens" means an organic or inorganic glass lens, comprising a lens substrate, which may be coated with one or more coatings of various natures.

The term "ophthalmic lens" is used to mean a lens adapted to a spectacle frame, for example to protect the eye and/or correct the sight. Said lens can be chosen from afocal, unifocal, bifocal, trifocal and progressive lenses. Although ophthalmic optics is a preferred field of the invention, it will be understood that this invention can be applied to optical articles of other types, such as, for example, lenses for optical instruments, in photography or astronomy, optical sighting lenses, ocular visors, optics of lighting systems, etc.

In the present description, unless otherwise specified, an optical article/material is understood to be transparent when the observation of an image through said optical article is perceived with no significant loss of contrast, that is, when the formation of an image through said optical article is obtained without adversely affecting the quality of the image. This definition of the term "transparent" can be applied to all objects qualified as such in the description, unless otherwise specified.

A substrate, in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical lens and more particularly of the ophthalmic lens. This material acts as support for a stack of one or more coatings or layers.

The substrate may be made of mineral glass or organic glass, preferably organic glass. The organic glasses can be either thermoplastic materials such as polycarbonates and thermoplastic polyurethanes or thermosetting (cross-linked) materials such as diethylene glycol bis(allylcarbonate) polymers and copolymers (in particular CR-39^{®} from PPG Industries), thermosetting polyurethanes, polythiourethanes, preferably polythiourethane resins having a refractive index of 1.60 or 1.67, polyepoxides, polyepisulfides, such as those having a refractive index of 1.74, poly(meth)acrylates and copolymers based substrates, such as substrates comprising (meth)acrylic polymers and copolymers derived from bisphenol-A, polythio(meth)acrylates, as well as copolymers thereof and blends thereof. Preferred materials for the lens substrate are polycarbonates (PC), diethylene glycol bis(allylcarbonate) polymers and substrates obtained from thermosetting polythiourethane resins, which are marketed by the Mitsui Toatsu Chemicals company as MR series, in particular MR-6^{®}, MR-7^{®} and MR-8^{®} resins. The latter substrates as well as the monomers used for their preparation are especially described in the patents US 4,689,387, US 4,775,733, US 5,059,673, US 5,087,758 and US 5,191,055.

The invention is particularly effective when applied to a lens substrate obtained from episulfides, and preferably polyepisulfide materials.

The invention further relates to a process of manufacturing an optical article such as herein described, comprising:
(i) providing an optical article comprising a substrate having at least one main surface,
(ii) optionally depositing on said surface an impact-resistant primer coating,
(iii) depositing on said surface resulting from step (i) or (ii) a curable composition for an abrasion-and/or scratch-resistant coating such as described previously,
(iv) curing the composition deposited at step (iii) so as to obtain a cured abrasion- and/or scratch-resistant coating.

The coatings or coating compositions may be deposited onto the surface of the optical article by liquid phase deposition or lamination according to any appropriate method, starting from the above-described liquid coating composition and then be dried, pre-cured or cured at a temperature of generally about 70-100°C, when necessary. Application of said composition may be carried out, without limitation, by spin coating, dip coating, spray coating, brush coating, roller coating or flow coating. Spin coating and dip coating are preferred. The drying/curing step is preferably performed using heat or ultraviolet radiation and comprises evaporation of the solvents, solidification and cross-linking of the reactive epoxy compounds.

The thickness of the cured abrasion- and/or scratch-resistant coating may be adapted to the specific application required and generally ranges from 0.5 to 50 µm, preferably from 1 to 20 µm or 1 to 10 µm, more preferably from 1.5 to 10 µm, even more preferably from 2 to 5 µm. The coating thickness can be easily adjusted by modifying the solvent concentration of the claimed compositions and the coating conditions, for example the withdrawal speed in case of deposition by dip coating. The longer the withdrawal time, the thinner will be the final dry coating.

The substrate's main surface can be coated with several functional coating(s) to improve its optical and/or mechanical properties. The functional coatings used herein can be selected from, without limitation to these coatings, an impact-resistant coating, an antireflection coating, a polarized coating, a photochromic coating, an antistatic coating, an anti-fouling coating (hydrophobic and/or oleophobic coating), an antifog coating, a precursor of an antifog coating or a stack made of two or more such coatings.

The abrasion and/or scratch-resistant coating according to the invention may be deposited onto a naked substrate or onto the outermost coating layer of the substrate if the substrate is coated with at least one surface coating.

In preferred embodiments, the at least one main surface of the optical article is successively coated with an impact-resistant primer coating and an abrasion and/or scratch-resistant coating as disclosed in the present invention.

The impact-resistant coating, preferably an impact-resistant primer coating, can be any coating typically used for improving impact resistance of a finished optical article. Also, this coating generally promotes adhesion of the further layers to the substrate in the end product, in particularly adhesion of the abrasion-resistant and/or scratch-resistant coating.

By definition, an impact-resistant coating is a coating that improves the impact resistance of the finished optical article as compared with the same optical article but without the impact-resistant coating.

Typical impact-resistant coatings are (meth)acrylic based coatings and polyurethane based coatings, optionally comprising fillers such as metal or metalloid oxide particles.

Preferred primer compositions include compositions based on thermoplastic polyurethanes, such as those described in the patents JP 63-141001 and JP 63-87223, poly(meth)acrylic primer compositions, such as those described in the patent US 5015523, compositions based on thermosetting polyurethanes, such as those described in the patent EP 0404111 and compositions based on poly(meth)acrylic latexes or polyurethane latexes, such as those described in the patents US 5,316,791 and EP 0680492.

Preferred primer compositions are compositions based on polyurethanes and compositions based on latexes, in particular polyurethane latexes, poly(meth)acrylic latexes and polyester latexes, as well as their combinations.

Primer coatings and abrasion-resistant and/or scratch-resistant coatings may be selected from those described in the application WO 2007/088312.

The impact-resistant coating composition may be deposited onto the surface of the optical article using any classical method such as spin-coating, dip-coating, or flow coating, and then be dried or cured at a temperature of about 70-100°C.

The thickness of the impact-resistant coating in the final optical article typically ranges from 0.2 to 2.5 µm, preferably from 0.5 to 1.5 µm.

The antireflection coating may be any antireflection coating traditionally used in the optics field, particularly ophthalmic optics. As is also well known, antireflection coatings traditionally comprise a monolayered or a multilayered stack composed of dielectric materials (generally one or more metal oxides) and/or sol-gel materials and/or organic/inorganic layers such as disclosed in WO 2013/098531. These are preferably multilayered coatings, comprising layers with a high refractive index (HI) and layers with a low refractive index (LI).

The structure and preparation of antireflection coatings are described in more details in patent application WO 2010/109154, WO 2011/080472, WO 2012/153072 and WO 2012/076714.

The antifouling top coat is preferably deposited onto the outer layer of the antireflective coating. As a rule, its thickness is lower than or equal to 10 nm, does preferably range from 1 to 10 nm, more preferably from 1 to 5 nm. Antifouling top coats are generally coatings of the fluorosilane or fluorosilazane type, preferably comprising fluoropolyether moieties and more preferably perfluoropolyether moieties. More detailed information on these coatings is disclosed in WO 2012076714.

The optical article according to the invention preferably has a relative light transmission factor in the visible spectrum Tv higher than or equal to 80 %, preferably higher than or equal to 85 %, more preferably higher than or equal to 87 %, and better higher than or equal to 89 %.

The present optical articles made from optical material according to the invention can be coated with antireflective coatings on one or both air/substrate interface(s). In such embodiments, the Tv factor preferably ranges from 87 % to 99 %, more preferably from 90 % to 98 %, even better from 92 % to 97 %.

The Tv factor, also called "luminous transmission" of the system, is such as defined in the standard NF EN 1836 and relates to an average in the 380-780 nm wavelength range that is weighted according to the sensitivity of the eye at each wavelength of the range and measured under D65 illumination conditions (daylight).

The optical article according to the invention has satisfactory color properties, which can be quantified by the yellowness index Yi. The degree of whiteness of the inventive optical material may be quantified by means of colorimetric measurements, based on the CIE tristimulus values X, Y, Z such as described in the standard ASTM E 313-05, through reflection measures with illuminant C observer 2°. The yellowness index Yi is calculated per ASTM method E313 through the relation Yi = (127.69 X - 105.92 Z)) / Y, where X, Y, and Z are the CIE tristimulus values. The optical article according to the invention preferably has a low yellowness index Yi, i.e., lower than 12 or 10, more preferably lower than 6, even better lower than 4, as measured according to the above standard.

The following examples illustrate the present invention in a more detailed, but non-limiting manner. Unless stated otherwise, all thicknesses disclosed in the present application relate to physical thicknesses. The percentages given in the tables are weight percentages. Unless otherwise specified, the refractive indexes referred to in the present invention are expressed at 25 °C at a wavelength of 550 nm.

### EXAM PLES

### 1. General procedures

The optical articles used in the examples comprise an ORMA^{®} lens substrate from ESSILOR having a refractive index of 1.50, a power of -2.00 diopters, or a polycarbonate substrate having a refractive index of X, a power of -2.00 diopters, or a polyepisulfide substrate having a refractive index of 1.74, a power of -4.00 diopters (all having a 65 mm diameter and a thickness of 1.2 mm).

The substrate of the optical article was successively coated with a primer coating having a refractive index of 1.6 and an abrasion- and/or scratch-resistant coating according to the invention.

The primer coating was formed from a coating composition having a dry extract weight of 20 % and containing a polyurethane latex (U5200 from Alberdingk Boley), a ZrO₂ based colloid (SZR-CW from Sakai Chemical Industry), deionized water and Coatosil 77 as a surfactant.

In examples 1-3, the abrasion- and/or scratch-resistant coating composition comprised γ-glycidoxypropyltrimethoxysilane (from Dynasylan) as compound (a) pre-hydrolyzed with 0.10 N HCl, dimethyl diethoxysilane (from Wacker) as compound (b), Optolake 1120Z S-95/A8 (from JGC catalysts) as a titanium oxide colloid (c1) (dry extract weight around 20.6 %, average particle diameter 10 nm), HX-400M7-20 (from Nissan Chemical Industries) as a tin oxide colloid (c2) (dry extract weight around 40.4 %, average particle diameter 5 nm), aluminum acetylacetonate Al(AcAc)₃, as polymerization catalyst compound (d), methylethylketone as solvent and BYK 3752 as a surfactant.

Example 4 comprises the same components except that the titanium oxide colloid (c1) and the tin oxide colloid (c2) were both represented by HT-R305M7-20 from Nissan Chemical Industries (dry extract weight around 30 %, average particle diameter 20 to 25 nm).

Optolake 1120Z S-95/A8 is a colloidal dispersion containing 20 % by weight of titanium-based composite oxide particles. This colloid contains tin oxide, zirconium oxide and silicon oxide dispersed in methanol.

HX-400M7-20 is a colloidal dispersion containing, by weight, tin oxide (between 30 and 40 %, expressed in terms of SnO₂), silicon oxide (minor amount, expressed as SiO₂) and methanol (around 60 %).

HT-R305M7-20 is a colloidal dispersion containing, by weight, titanium oxide (between 10 and 20 %, expressed in terms of TiO₂), tin oxide (between 2 and 10 %, expressed in terms of SnO₂), silicon oxide, zirconium oxide and methanol (around 70 %).

### Formulation of the abrasion- and/or scratch-resistant coatings

0.1 N hydrochloric acid was slowly added in Glymo for 15 minutes. Hydrolysis was performed by stirring at a temperature lower than 40°C. At least 1 hour after hydrolysis, DMDES was added to the reaction mixture, which was stirred for 15 minutes. Then, the colloid Optolake 1120Z S-95/A8 was slowly added (or HT-R305M7-20 for example 4), followed by the colloid HX-400M7-20, over 30 minutes. The reaction mixture was stirred for 18-20 hours after addition of the colloids. Aluminum acetylacetonate was added to the reaction mixture, which was stirred for 30 minutes. Methylethylketone and the surfactant BYK 3752 were added over 30 minutes. After 1 hour of further stirring, the reaction mixture was filtered and recovered. Dry extract and viscosity of the recovered solution were measured.

### Deposition conditions of the abrasion- and/or scratch-resistant coatings

Each of the coating compositions was deposited by dip coating on both faces of a lens substrate previously cleaned with diluted NaOH (500 rpm for 5s, then 1000 rpm for 10s), at a withdrawal speed of 2.5-3.0 mm/s. The resulting wet coatings were pre-cured at 70°C generally for 12 minutes and post-cured at 100-110°C for 3 hours. The (dry) coating thicknesses were 0.8 µm for the primer and 2.6 ± 0.5 µm for the abrasion- and/or scratch-resistant coating which had a refractive index of 1.6.

### 2. Evaluation of the coating performances

a) Resistance of the inventive coating to photo-degradation (UV) was evaluated following exposure to the sun conditions of the Q-sun test. The Q-sun test consists in introducing the prepared articles in a Q-SUN^{®} Xe-3 xenon chamber, reproducing full spectrum sunlight, purchased from Q-LAB, at a chamber temperature of 40°C (0.68W/m², black panel 60°C), initial relative humidity: ambient (i.e., around 50%), and exposing their convex side to irradiation for 24h or 80h. Appearance of cracks in the hard coat was determined after these periods, optionally after having submitted the articles to accelerated aging conditions (24h storage in a climatic chamber at 65°C and 90 % relative humidity). The first conditions evaluate the UV contribution in cracks appearance and the second conditions evaluate the combined contribution of UV and water in cracks appearance.
b) Residual color of UV sensitive substrate was measured after 80h irradiation in Q-SUN^{®} Xe-3 xenon chamber with the same parameters described above. The yellowness index Yi of the prepared optical articles was calculated by measuring on a white background with a Cary 60 spectrophotometer the CIE tristimulus values X, Y, Z such as described in the standard ASTM E 313-05, through reflection measures with illuminant C observer 2°. The residual color is the difference of YI before and after exposition. The lower evolution, the better.
c) Abrasion resistance and haze were determined as disclosed in WO 2012/173596. Specifically, abrasion resistance was measured by means of the sand Bayer test, in accordance with the ASTM F735-81 standard. Haze was measured on a Haze-Gard XL-211 Plus apparatus from BYK-Gardner in accordance with the standard ASTM D1003-00. As haze is a measurement of the percentage of transmitted light scattered more than 2.5° from the axis of the incident light, the smaller the haze value, the lower the degree of cloudiness. Generally, for optical articles described herein, a haze value of less than or equal to 0.3 % is acceptable, more preferably of less than or equal to 0.2 %.
d) The light transmission factor in the visible spectrum Tv was measured in transmission mode (incidence angle: 0°) from a wearer's view angle using a Cary 4000 spectrophotometer from Hunter, with the back (concave) side of the lens (1.2 mm thickness at the center) facing the detector and light incoming on the front side of the lens. Tv was measured under D65 illumination conditions (daylight).
e) The yellowness index Yi of the prepared optical articles was calculated by measuring on a white background with a Cary 60 spectrophotometer the CIE tristimulus values X, Y, Z such as described in the standard ASTM E 313-05, through reflection measures with illuminant C observer 2°. A low yellowness index Yi indicates a high degree of whiteness.
In another test, the evolution of the yellowness index Yi of the hard coated optical articles was measured after 80h Q-Sun test. The lower evolution, the better.
f) Wet adhesion test (crosshatch test) measures the water sensitivity of the coating. Adhesion of the coatings was measured using the crosshatch adhesion test according to ASTM D3359-93, by cutting through the coatings a series of 5 lines, spaced 1 mm apart with a razor, followed by a second series of 5 lines, spaced 1 mm apart, at right angles to the first series, forming a crosshatch pattern comprising 25 squares. After blowing off the crosshatch pattern with an air stream to remove any dust formed during scribing, the articles were placed 30 minutes in boiling water, removed from this bath and stored for 60 minutes at room temperature. Clear cellophane tape (3M SCOTCH^{®} n° 600) was then applied over the crosshatch pattern, pressed down firmly, and then rapidly pulled away from coating in a direction perpendicular to the coating surface. Application and removal of fresh tape was then repeated four additional times. Adhesion is rated as follows (0 is the best adhesion, 1-4 is in the middle, and 5 is the poorest adhesion):

| Adhesion score | Squares removed | Area % left intact |
|---|---|---|
| 0 | 0 | 100 |
| 1 | < 1 | > 96 |
| 2 | 1 to 4 | 96-84 |
| 3 | > 4 to 9 | 83-64 |
| 4 | > 9 to 16 | 63-36 |
| 5 | > 16 | < 36 |

Water sensitivity of the coating was also investigated by performing a storage test. The optical articles were stored in a climatic chamber at 65°C and 90 % relative humidity. The above adhesion test was performed each day until failure (note = 5). The products can be ranked based on the number of days before failure (the longer, the better).

### 3. Results

Examples C1 to C7 show that tin oxide expressed as SnO₂ and titanium oxide expressed as TiO₂ should be present in the composition in a weight ratio of TiO₂/(TiO₂+SnO₂) ranging from 35 % to 75 %. If this weight ratio is too low (examples C1, C2), corresponding to a low amount of TiOz used, resistance to UV exposure of the resulting optical article is not sufficient and yellowing is observed. If this weight ratio is too high (examples C6, C7), corresponding to a high amount of TiO₂ used, cracks are observed in the abrasion- and/or scratch-resistant coating after UV exposure of the optical article.

The amounts of the components in the coating composition of examples C1 to C7 were adapted to have in each case a coating having a refractive index of 1.6.

| Example | C1 | C2 | C3 | C4 | C5 | C6 | C7 |
|---|---|---|---|---|---|---|---|
| Glymo (%) | 20.1 | 20.6 | 22.3 | 22.7 | 20.1 | 22.6 | 22.4 |
| HCl 0.1N (g) | 4.6 | 4.7 | 5.1 | 5.2 | 5.4 | 5.2 | 5.1 |
| DMDES (%) | 0 | 0 | 0 | 0 | 3.2 | 0 | 0 |
| 1120Z S-95/A8 (titanium oxide colloid) (%) | 0 | 10.8 | 40.4 | 57.2 | 56.3 | 62.1 | 66.1 |
| HX-400M7-20 (tin oxide colloid) (%) | 58.8 | 50.0 | 27.1 | 12.7 | 12.5 | 7.9 | 3.8 |
| Al(acac)₃ (%) | 1.4 | 1.4 | 1.5 | 1.6 | 1.6 | 1.6 | 1.6 |
| Methylethylketone (%) | 15.0 | 12.4 | 3.6 | 0.5 | 0.8 | 0.5 | 1.0 |
| BYK 3752 (%) | 0.1 | 0.1 | 0.1 | 0.1 | 0.1 | 0.1 | 0.1 |
| TiO₂/(TiO₂+SnO₂) | 0 % | 5.6 % | 29 % | 55.1 % | 68.2 % | 82.8 % | 100 % |
| Dry extract weight ratio of colloidal particles of titanium oxide relative to total colloids (*) | 0 % | 10 % | 43 % | 69.9 % | 80 % | 90 % | 100 % |
| Residual color after 80h Q-sun test (Yi) | 28.7 | 14.1 | 2.8 | 1.4 | 1.3 | 1.2 | 1.1 |
| Cracks after 80h Q-sun test | No | No | No | No | No | No | +++ |
| Cracks after 24h Q-sun test and 24h storage at 65°C and 90 % relative humidity | No | No | No | No | No | + | +++ |

| | | | | | | | |
|---|---|---|---|---|---|---|---|
| (*) (dry extract weight of colloidal particles of titanium oxide) / (dry extract weight of colloidal particles of titanium oxide + dry extract weight of colloidal particles of tin oxide). | | | | | | | |

Examples C7, C4 and 1-4 show that the silane compound of formula (II) (compound (b)) should be present in an amount ranging from 1 to 10 %, relative to the dry extract weight of the composition. If the amount of compound (b) is too low (examples C7, C4), water sensitivity of the coating is too high. If the amount of compound (b) is too high (data not shown), abrasion resistance of the resulting optical article is not sufficient, and haze becomes too important, indicating a lowered transparency. UV sensitivity, transmission and yellowness index of the optical article are not impacted by the amount of silane compound (b).

### Weight amounts

| Example | C7 | C4 | 1 | 2 | 3 | 4 |
|---|---|---|---|---|---|---|
| Glymo (g) | 22.6 | 22.7 | 21.0 | 20.1 | 19.2 | 25.8 |
| HCl 0.1N (g) | 5.2 | 5.2 | 5.3 | 5.4 | 5.5 | 6.7 |
| DMDES (g) | 0 | 0 | 1.9 | 3.2 | 4.5 | 3.4 |
| 1120Z S-95/A8 (titanium oxide colloid) (g) | 70.3 | 57.2 | 56.3 | 56.3 | 56.3 | 0 |
| HT-R305M7-20 (titanium oxide colloid) (g) | 0 | 0 | 0 | 0 | 0 | 31.9 |
| HX-400M7-20 (tin oxide colloid) (g) | 0 | 12.7 | 12.5 | 12.5 | 12.5 | 10.5 |
| Al(acac)₃ (g) | 1.6 | 1.6 | 1.6 | 1.6 | 1.6 | 1.6 |
| Methylethylketone (g) | 0.2 | 0.5 | 1.3 | 0.8 | 0.3 | 20.0 |
| BYK 3752 (g) | 0.1 | 0.1 | 0.1 | 0.1 | 0.1 | 0.1 |
| Total (g) | 100 | 100 | 100 | 100 | 100 | 100 |
| TiO₂/(TiO₂+SnO₂) | 100 % | 55.1 % | 55.1 % | 55.1 % | 55.1 % | 48.2 % |
| Δ Yi after 80h Q-sun test | 1.1 | 1.4 | 1.6 | 1.4 | 1.3 | 0.7 |
| Cracks after 80h Q-sun test | +++ | No | No | No | No | No |
| Cracks after 24h Q-sun test and 24h storage at 65°C and 90 % relative humidity | +++ | No | No | No | No | No |
| Storage test at 65°C and 90 % relative humidity (days until failure) | 10 | 12 | 13 | 12 | 14 | N/A |
| Wet adhesion test (water sensitivity) | 5 | 5 | 2 | 0 | 0 | 0 |
| Tv (%) | 89.5 | 89.5 | 89.5 | 89.4 | 89.3 | 89.9 |
| Yi | 2 | 2.1 | 2 | 2.1 | 2.1 | 1.8 |
| Haze | 0.16 | 0.17 | 0.18 | 0.19 | 0.2 | 0.22 |
| Abrasion resistance | 4.0 | 4.1 | 3.6 | 3.4 | 3.2 | 3.1 |

| | | | | | | |
|---|---|---|---|---|---|---|
| N/A: non available | | | | | | |

### Dry weights

| Example | C7 | C4 | 1 | 2 | 3 | 4 |
|---|---|---|---|---|---|---|
| Glymo (%) | 49.8 | 46.4 | 43.5 | 41.6 | 39.7 | 51.1 |
| DMDES (%) | 0 | 0 | 2.9 | 4.8 | 6.7 | 4.8 |
| 1120Z S-95/A8 (titanium oxide colloid) (%) | 45.0 | 34.0 | 34.0 | 34.0 | 34.0 | 0 |
| HT-R305M7-20 (titanium oxide colloid) (%) | 0 | 0 | 0 | 0 | 0 | 27.5 |
| HX-400M7-20 (tin oxide colloid) (%) | 0 | 14.8 | 14.8 | 14.8 | 14.8 | 11.9 |
| Al(acac)₃ (%) | 4.9 | 4.5 | 4.5 | 4.5 | 4.5 | 4.4 |
| BYK 3752 (%) | 0.3 | 0.3 | 0.3 | 0.3 | 0.3 | 0.3 |
| Total (%) | 100 | 100 | 100 | 100 | 100 | 100 |
| Dry extract weight of the composition (%) | 32.2 | 34.7 | 34.2 | 34.2 | 34.2 | 36.1 |
| Dry extract weight ratio of colloidal particles of titanium oxide relative to total colloids (*) | 100 % | 69.9 % | 69.9 % | 69.9 % | 69.9 % | 69.7 % |
| TiO₂ (%) | 21.9 | 16.5 | 16.5 | 16.5 | 16.5 | 14.5 |
| SnO₂ (%) | 0 | 13.4 | 13.4 | 13.4 | 13.4 | 15.6 |
| SiO₂ (%) | 16.4 | 13.7 | 13.7 | 13.7 | 13.7 | 5.1 |
| ZrO₂ (%) | 5.5 | 4.1 | 4.1 | 4.1 | 4.1 | 3.4 |
| TiO₂/(TiO₂+SnO₂) | 100 % | 55.1 % | 55.1 % | 55.1 % | 55.1 % | 48.2 % |

| | | | | | | |
|---|---|---|---|---|---|---|
| (*) (dry extract weight of colloidal particles of titanium oxide) / (dry extract weight of colloidal particles of titanium oxide + dry extract weight of colloidal particles of tin oxide). | | | | | | |

The optical articles of examples 1-4 have low diffusion level, low yellowness, low UV sensitivity, low water sensitivity and maintains satisfactory abrasion resistance.

## Claims

1. A curable composition for an abrasion-and/or scratch-resistant coating, comprising:
(a) at least one epoxy compound bearing at least one silicon atom having at least one hydrolyzable group directly linked to the silicon atom and at least one group comprising an epoxy function linked to the silicon atom through a carbon atom, and/or a hydrolyzate thereof,
(b) at least one silane compound of formula (II), and/or a hydrolyzate thereof: 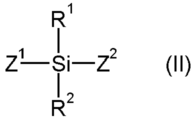 in which Z¹ and Z² independently represent a hydrolyzable group or a hydrogen atom, R¹ and R² independently represent a monovalent organic group linked to the silicon atom through a carbon atom and that does not contain any epoxy group,
(c) colloidal particles of metal oxide or metalloid oxide, comprising (c1) colloidal particles of titanium oxide, and (c2) colloidal particles of tin oxide,
(d) at least one curing catalyst,
wherein compounds (b) are present in an amount ranging from 1 to 10 %, relative to the dry extract weight of the composition,
and wherein tin oxide expressed as SnO₂ and titanium oxide expressed as TiO₂ are present in the composition in a weight ratio of TiO₂/(TiO₂+SnO₂) ranging from 35 % to 75 %.

2. A curable composition according to claim 1, wherein compounds (a) are present in an amount ranging from 25 to 65 %, relative to the dry extract weight of the composition.

3. A curable composition according to any one of the preceding claims, wherein compounds (b) are present in an amount ranging from 3 to 7 %, relative to the dry extract weight of the composition.

4. A curable composition according to any one of the preceding claims, wherein compounds (c) are present in an amount ranging from 30 to 70 %, relative to the dry extract weight of the composition.

5. A curable composition according to any one of the preceding claims, wherein titanium oxide expressed as TiO₂ is present in an amount ranging from 10 to 22 %, relative to the dry extract weight of the composition.

6. A curable composition according to any one of the preceding claims, wherein tin oxide expressed as SnO₂ is present in an amount ranging from 7 to 19 %, relative to the dry extract weight of the composition.

7. A curable composition according to any one of the preceding claims, wherein said colloidal particles of titanium oxide (c1) comprise composite particles of titanium oxide, preferably composite particles of titanium oxide, zirconium oxide and silicon oxide.

8. A curable composition according to any one of the preceding claims, wherein compound (a) is a compound of formula:
R_{n'}YₘSi(X)_{4-n'-m} (I)
in which the R groups are identical or different and represent monovalent organic groups linked to the silicon atom through a carbon atom and that do not contain any epoxy group, the Y groups are identical or different and represent monovalent organic groups linked to the silicon atom through a carbon atom and contain at least one epoxy function, the X groups are identical or different and represent hydrolyzable groups or hydrogen atoms, and m and n' are integers such that m is equal to 1 or 2 and n' + m = 1 or 2.

9. A curable composition according to claim 8, wherein the Y groups are chosen from the groups of formulae III and IV: 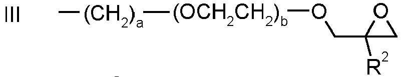 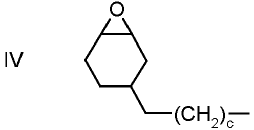 in which R² is an alkyl group, preferably a methyl group, or a hydrogen atom, ideally a hydrogen atom, a and c are integers independently ranging from 1 to 6, and b is 0, 1 or 2.

10. A curable composition according to any one of the preceding claims, wherein in said silane compound (b) of formula (II), the R' and R² groups independently represent an alkyl group, and the Z¹ and Z² groups independently represent an alkoxy group.

11. A curable composition according to any one of the preceding claims, wherein said silane compound (b) of formula (II) is selected from dimethyldiethoxysilane, dimethyldimethoxysilane and methylphenyldimethoxysilane.

12. A curable composition according to any one of the preceding claims, wherein compound (c) comprises colloidal particles of silicon oxide

13. An optical article comprising a substrate having at least one main surface coated with an abrasion- and/or scratch-resistant coating, wherein the abrasion- and/or scratch-resistant coating is formed from a curable composition according to any one of claims 1 to 12.

14. An optical article according to claim 13, wherein the abrasion- and/or scratch-resistant coating has a thickness ranging from 1 to 10 µm.

15. An optical article according to claim 13 or 14, further defined as being an optical lens, preferably an ophthalmic lens.
